# EUROPEAN PATENT SPECIFICATION

(11) **EP 2 011 679 B1**
(45) Date of publication and mention of the grant of the patent: **11.05.2011**
(21) Application number: 08159633.0
(22) Date of filing: 03.07.2008
(51) Int. Cl.: B60J 5/04, B62D 25/04, E05B 15/02

(54) **A striker reinforcement for an automotive door frame**
Schließteilverstärkung für einen Fahrzeugtürrahmen
Renforcement d'une gâche pour un cadre de porte de véhicule

(30) Priority: 06.07.2007 US 774503
(43) Date of publication of application: 07.01.2009
(73) Proprietor: Ford Global Technologies, LLC, Dearborn, MI 48126 (US)
(72) Inventor: Chen, Xiaoming, Canton, MI 48188 (US); Wagner, David, Northville, MI 48167 (US); Ratsos, Lou, Commerce Township, MI 48390 (US); Szalay, Daniel, Belleville, MI 48111 (US)
(74) Representative: Messulam, Adam Clive

(56) References cited:
- DE-A1- 3 026 174
- DE-C1- 4 401 071
- GB-A- 2 178 126
- US-A- 5 118 234
- US-A1- 2004 056 516

## Description

This invention relates generally to a side door assembly in an automotive vehicle and more particularly to a striker reinforcement that is compatible for use with a hydroformed tubular door frame member.

Forming the frame of an automobile from hydroformed, closed section, tubular members provides an automotive body structure that improves both roof strength and side impact intrusion resistance as compared to conventional spot welded, stamped, open section frame members. Open sections frame members, however, did not impede the use of structural reinforcements where needed on the inside portion of the frame member to carry specific loads. Closed section, hydroformed tubular frame members causes difficulties with respect to the attachment of reinforcements that need to be placed on the inside portion of the frame member as internal access into the tubular frame member is limited. While forming an opening in the tubular frame member would present a solution to gaining access to the interior of the tubular member for the placement of reinforcements, but the formation of such an opening would degrade the stiffness of the hydroformed frame member.

The placement of a striker reinforcement is one of the challenges created with the use of a hydroformed tubular member as the B-pillar of an automotive frame. The B-pillar carries the striker, which engages the latch mechanism carried by the door to secure the door in a closed orientation with respect to the automotive frame. The latch and striker are designed to work together to secure the door against the B-pillar, and prevent the door from inadvertently opening in the event of a crash, but is also designed to control squeaks and rattles, and door chucking. From an assembly standpoint, the striker and latch system will also provide the ability to set door position adjustment for fit and finish. Since the striker is set and adjusted from the door opening, attaching the striker to the door opening panel or to the body side panel would not provide sufficient strength to manage the loads required during the side impact or pull-out tests. Reinforcement is required to allow the striker and the striker reinforcement to sandwich the thin sheet metal body panel and distribute the load over a greater area.

A typical striker reinforcement is a deformable plate attached to the inner side of the B-pillar. Placement of the striker reinforcement in a closed section, hydroformed tubular B-pillar is the challenge.

The mounting of a striker in an open section, stamped B-pillar is shown in U.S. Patent No. 6,126,410 and the use of a positionable striker reinforcement member in an open section automotive frame member is disclosed in U.S. Patent Publication No. 2004/0042869. Furthermore, U.S. Patent Publication No. 2004/0119300 discloses a striker reinforcement that is welded to the inside portion of an open section automotive frame member. A hydroformed B-pillar structure is shown in U.S. Patent Publication No. 2006/0273630 but the mounting of the striker reinforcement is not disclosed in this published patent application.

The placement of a striker reinforcement in a closed section frame member is depicted in U.S. Patent No. 4,432,575 where the anchor plate is welded to the inside wall of the vehicle door lock pillar. Although this striker configuration is in conjunction with a closed section pillar, the pillar is formed from stamped, welded sections, rather than being hydroformed. Accordingly, the striker reinforcement has to be welded in placed before the pillar is formed into the closed section or access to the interior of the pillar is necessary to place the striker reinforcement on the interior of the pillar structure. A similar striker assembly is taught in U. S. Patent No. 6,814,401 in which the reinforcement is placed on the interior of a closed section formed pillar that requires access to the interior in order to affix the striker reinforcement.

It is an object of this invention to provide a striker reinforcement plate suitably for use on a closed section hydroformed tubular frame member such as a B-pillar of an automotive frame.

It is a further object of this invention to overcome the aforementioned disadvantages of the known prior art by providing a striker reinforcement plate that can be installed into the interior of the closed section tubular frame member from the exterior side thereof.

It is another object of this invention to provide a method of installing a striker reinforcement plate onto the interior side of a closed section hydroformed automotive frame member.

According to a first aspect of the invention there is provided a striker reinforcement plate for support of a striker member on an automotive frame member, the striker reinforcement plate comprising a central portion formed with a pair of vertically spaced mounting holes, an enlarged mounting tab at one end of the striker reinforcement plate connected to the central portion by at least one first strip and a weld tab at an opposing end of the striker reinforcement plate connected to the central portion by at least one second strip, characterized in that the enlarged mounting tab has a dimension that is greater than a mounting slot formed in the automotive frame member through which the central portion can pass such that the enlarged mounting tab cannot pass through the mounting slot.

The at least one first and second strips may be deformable strips.

The at least one first strip may include a pair of deformable first strips interconnecting the mounting tab to the central portion and the at least one second strip may include a pair of deformable second strips interconnecting the weld tab to the central portion.

The weld tab may be insertable through an engagement opening in the automotive frame member so as to extend from an internal position of the automotive frame member to an exterior surface of the automotive frame member so that the weld tab can be welded to the exterior surface of the automotive frame member.

According to a second aspect of the invention there is provided an automotive body structure comprising a closed tubular frame member having an interior surface and an exterior surface characterised in that the tubular frame member is formed with a pair of oversized holes, a mounting slot and an engagement opening and a striker reinforcement plate constructed in accordance with said first aspect of the invention is mounted on the frame member.

The pair of vertically spaced mounting holes of the central portion may be alignable with the oversized holes in the frame member, the mounting tab may be engageable with the mounting slot and the weld tab may be received within the engagement opening.

The central portion may be movable relative to the mounting tab and the weld tab through deformation of the deformable strips to permit an adjustable positioning of the mounting holes relative to the oversized holes in the frame member.

The tubular frame member may be formed by a hydroforming process.

The mounting slot may be formed in the frame member below the oversized holes and the engagement opening may be formed above the oversized holes.

The tubular frame member may be a B-pillar of a motor vehicle or automobile.

According to a third aspect of the invention there is provided a method of installing a striker reinforcement plate into a closed tubular automotive frame member having a pair of oversized holes formed therein extending between an exterior surface of the frame member and an interior surface of the frame member characterised in that the method comprises passing a weld tab and a central portion of the striker reinforcement plate through a mounting slot formed in the frame member, inserting the weld tab from the interior surface of the frame member through an engagement opening to the exterior surface of the frame member, positioning an enlarged mounting tab of the striker reinforcement plate on the exterior surface of the frame member adjacent the mounting slot to limit movement of the striker reinforcement plate through the mounting slot and welding the weld tab to the exterior surface of the frame member.

The enlarged mounting tab may be formed with a size dimension that prevents passage of the mounting tab through the mounting slot.

The striker reinforcement plate may be formed with deformable strips interconnecting, respectively, the mounting tab and the weld tab with the central portion and the method may further comprise orienting mounting holes formed in the central portion with the oversized holes by deforming the deformable strips to permit a movement of the central portion relative to the oversized holes.

The orienting step may be accomplished after the welding step.

The welding step may be accomplished by MIG-welding the weld tab to the exterior surface of the frame member.

The method may further comprise orienting the frame member such that the mounting slot is located above the engagement opening before passing the weld tab and the central portion of the striker reinforcement plate through the mounting slot formed in the frame member.

The method may further comprise using a tool to engage mounting holes in the central portion through the oversized holes so as to secure the striker reinforcement plate in position before welding the weld tab to the exterior surface of the frame member.

It is an advantage of this invention that the striker reinforcement plate can be installed through a slot formed in a hydroformed frame member.

It is another advantage of this invention that the striker reinforcement plate can be welded to an exterior surface of the hydroformed tubular member.

It is still another advantage of this invention that a deformable striker reinforcement plate, simulating the known performance of conventional deformable striker reinforcement plates, can be utilized in a hydroformed tubular automotive frame construction.

It is yet another advantage of this invention that the striker can be mounted to the striker reinforcement plate in the same conventional manner as previously established in current automotive production.

The invention will now be described by way of example with reference to the accompanying drawing of which:-
Figure 1 is a partial perspective view of an automotive body structure showing a B-pillar between front and rear door openings;
Figure 2 is a perspective view of the of the B-pillar frame member forming the structural support of the automotive body structure depicted in Figure 1;
Figure. 3 is a perspective view of the B-pillar similar to that of Figure 2, but having a portion broken away to show a striker reinforcement plate;
Figure 4 is an enlarged perspective view of the portion of the B-pillar corresponding to the circle 4 shown in Figure 3;
Figure 5 is an enlarged perspective view of the striker reinforcement plate looking from the exterior side of the B-pillar;
Figure 6 is an enlarged perspective view of the striker reinforcement plate similar to that of Figure 5, but looking from the interior side of the B-pillar;
Figure 7A is a schematic view of a portion of the B-pillar with the striker reinforcement plate being positioned to begin assembly;
Figure 7B is a schematic view similar to Figure 7A but with the striker reinforcement plate being passed through the mounting slot into the interior of the B-pillar;
Figure 7C is a schematic view similar to Figure 7B but with the striker reinforcement plate positioned for the welding step, mandrels being schematically indicated by arrows to secure the striker reinforcement plate in position for welding; and
Figure 7D is a schematic view similar to Figure 7C but with the striker reinforcement plate fully assembled and welded onto the B-pillar frame member.

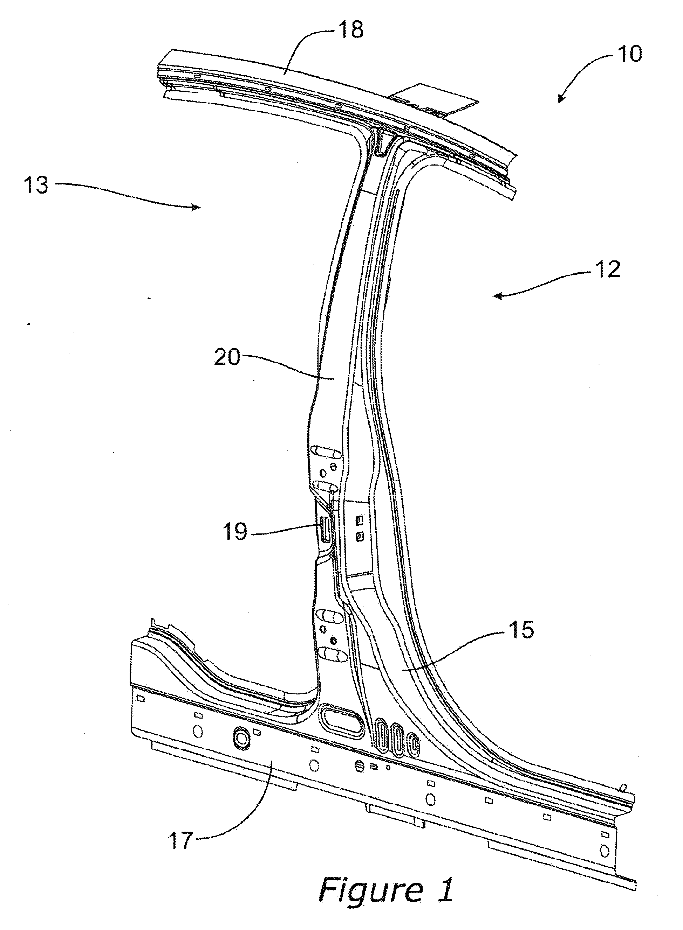

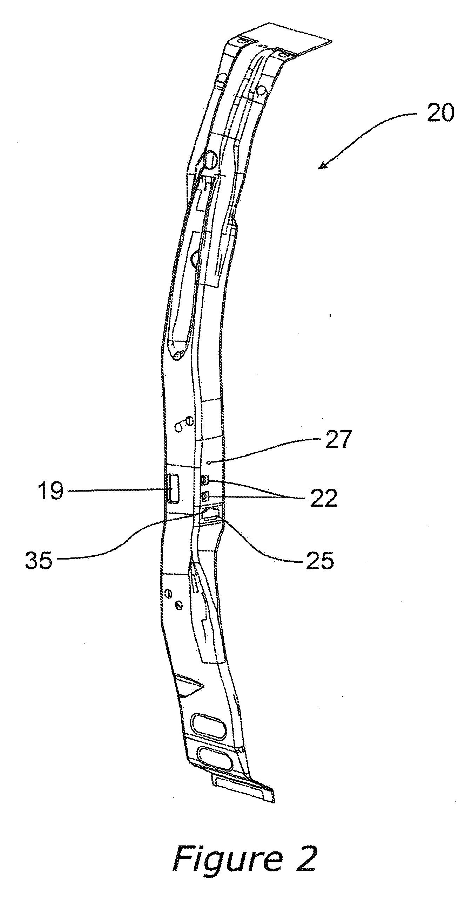

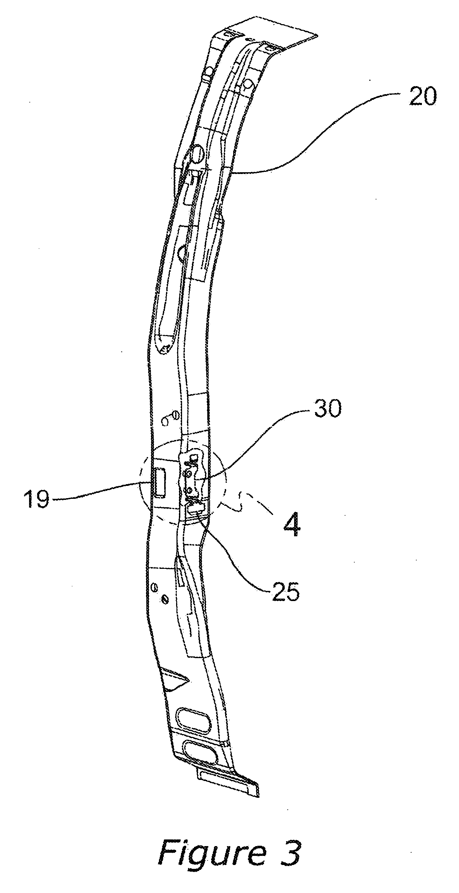

Referring to Figures 1 to 3, a portion of an automotive body structure at the B-pillar, which is found between the front and rear door openings of the automotive vehicle, incorporating the principles of the instant invention can best be seen. The automotive body structure 10 between the front door opening 12 and the rear door opening 13 includes a door opening panel 15 supported on a B-pillar 20 extending between a lower frame member or rocker 17 and an upper frame member or roof rail 18. The B-pillar 20 is formed from a tubular member through a hydroforming process by which a standard tubular stock member is placed into a form shaped to correspond to the particular member to be formed. A liquid is then introduced into the interior of the tubular stock and pressurized until the tubular stock expands to assume the shape defined by the configured form. The expanded and re-shaped tubular stock now has a substantially different shape. Cutouts and other access openings are created by the form during the hydroforming process to provide openings for the passage of spot-welding electrodes and/or wiring access holes 19.

The B-pillar 20 carries the striker against which the door latching mechanism (not shown) engages to secure the door (not shown) in a closed position against the door opening panel 15, as will be recognized by one of ordinary skill in the art. The striker needs to be mounted into a striker reinforcement 30 carried on the interior side of the B-pillar 20 in order to spread the loads associated with the latching and securing of the door over a satisfactory area of the B-pillar 20.

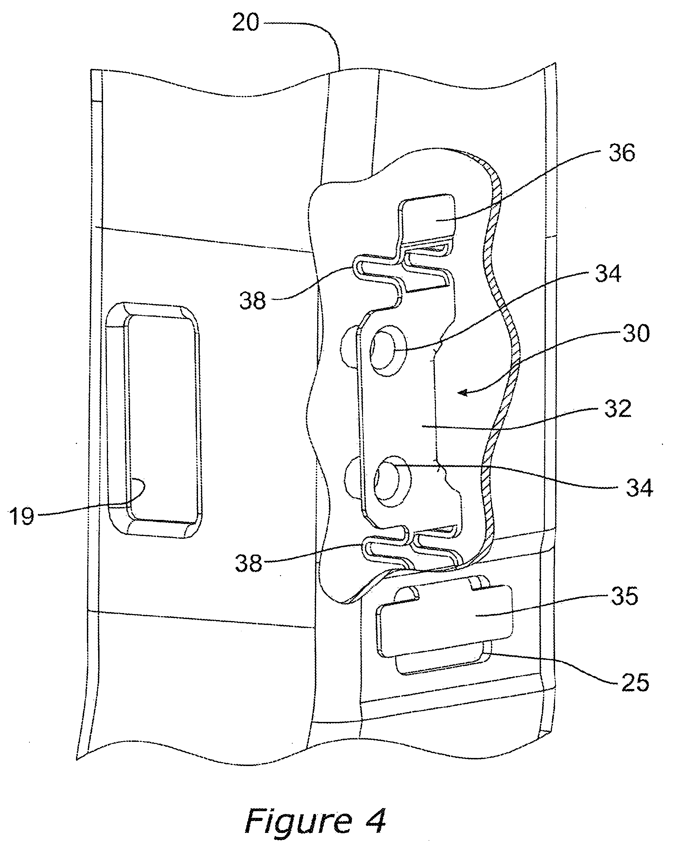

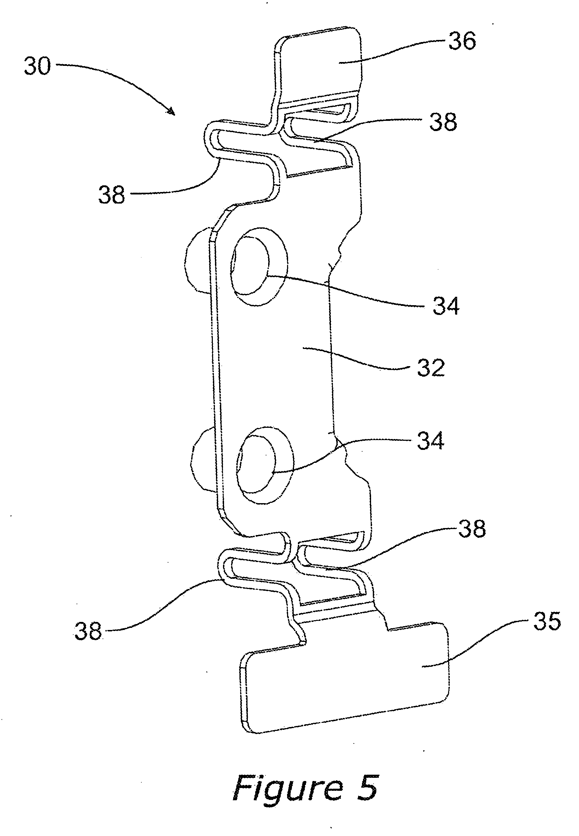

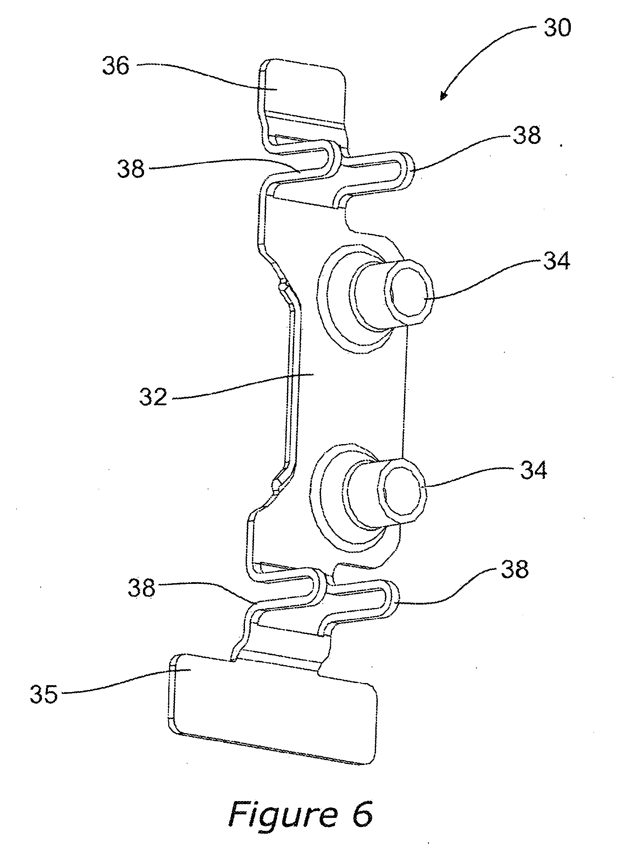

As best seen in Figures 4 to 6, the striker reinforcement plate 30 is formed with a central portion 32 having a pair of vertically spaced mounting holes 34 therein. At one end of the reinforcement plate 30, an enlarged mounting tab 35 forms the terminus of the striker reinforcement plate 30 while a smaller weld tab 36 defines the opposing terminus. The central portion 32 is connected with the mounting tab 35 and the weld tab 36 by deformable strips 38 that permit the central portion 32 to be moved vertically and horizontally through deformation of the strips 38. The striker (not shown) mounts to the central portion 32 by bolts (not shown) that pass through oversized holes 22 in the B-pillar 20 for the passage and movement of the bolts connecting the striker to the striker reinforcement plate 30.

The B-pillar 20 is also formed with a mounting slot 25 located below two oversized holes 22 and an engagement opening 27 above the oversized holes 22 for the receipt of the weld tab 36, as will be described in greater detail below. The size of the slot 25 is sufficient to allow the passage of the central portion 32 of the striker reinforcement plate 30, which determined specifically by the design of the latching mechanism (not shown) associated with the door (not shown), so that the striker reinforcement plate 30 can slide through the mounting slot 25. The enlarged mounting tab 35, however, is sized to prevent passage of the entire striker reinforcement plate 30 through the mounting slot 25. Thus, the striker reinforcement plate cannot fall into the interior of the B-pillar 20. The size of the engagement opening 27 is sufficient to receive the weld tab 36.

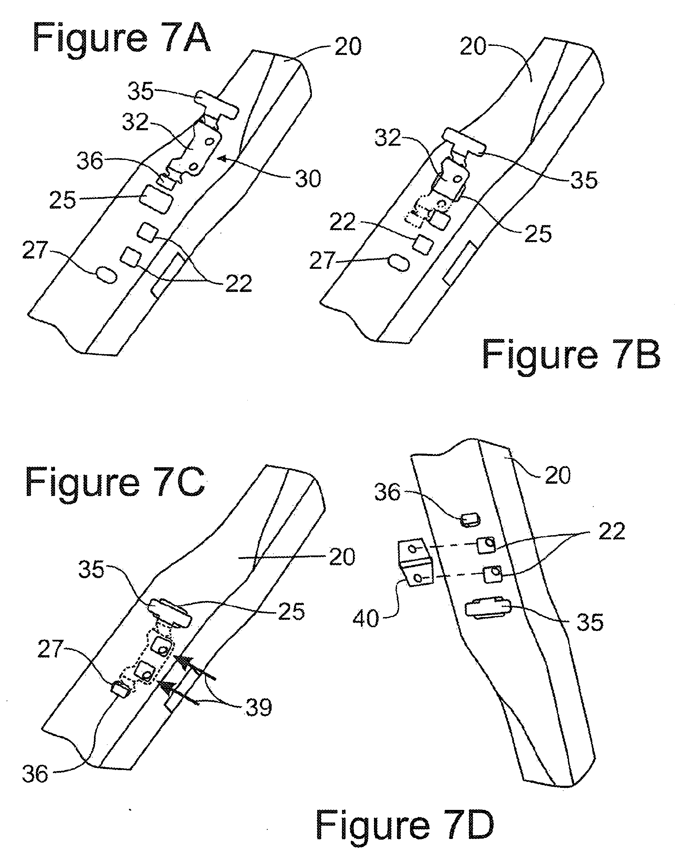

As best seen in Figures 7A to 7D, the installation of the striker reinforcement plate 30 can be accomplished through the steps of inserting the striker reinforcement plate 30 from the exterior of the B-pillar 20 through the mounting slot 25 directing the weld tab 36 toward the engagement opening 36. The enlarged mounting tab 35 prevents the striker reinforcement plate 30 from passing through the mounting slot 25 and being lost internally in the B-pillar 20. This process of inserting the striker reinforcement plate 30 through the mounting slot 25 until the weld tab 36 is received within the engagement opening 27 is enhanced by inverting the B-pillar, which is reflected in Figures 7A to 7C, so that gravity helps to move the weld tab 36 into position within the engagement opening 27. The striker reinforcement plate 30 can then be secured into position by a tool, such as mandrels, represented by the arrows 39 in Figure 7C, until the weld tab 36 is welded, such as by MIG welding, to the exterior surface of the B-pillar 20. The welding of the weld tab 36 to the B-pillar secures the striker reinforcement plate 30 in proper position.

It will be appreciated that the striker 40, as indicated in Figure 7D, can be mounted to the striker reinforcement plate 30 in a conventional manner with the bolts passing through the oversized holes 22 and engaging the mounting holes 34 in the central portion 32. Positional adjustment of the striker can then be accomplished by moving the central portion 32 horizontally and/or vertically as permitted by the deformable strips 38 and the limits imposed by the oversized holes 22. Once properly positioned, the bolts can be tightened to clamp the striker 40 and the striker reinforcement plate 30 on opposite sides of the wall of the B-pillar 20 to secure the striker 40 for operation.

Therefore in summary, it is a feature of this invention that the striker reinforcement plate is formed to fit through a slot formed into a hydroformed automotive frame member from the exterior of the frame member.

It is another feature of this invention that the striker reinforcement plate is formed with an enlarged mounting tab to engage the exterior surface of the hydroformed tubular member to prevent the striker reinforcement plate from falling into the interior of the tubular member.

It is still another feature of this invention that the striker reinforcement plate includes a weld tab that extends from inside the hydroformed tubular member through an opening in the tubular member to permit the weld tab to be welded to the exterior of the tubular member.

It is yet another feature of this invention that a mandrel engaging the bolt holes of the striker reinforcement plate can be used to position the striker reinforcement plate for welding the weld tab to the exterior surface of the tubular frame member.

It is a further feature of this invention that a striker reinforcement plate is provided for installation into a closed section hydroformed tubular automotive frame member that is durable in construction, inexpensive of manufacture, carefree of maintenance, facile in assemblage, and simple and effective in use.

## Claims

1. A striker reinforcement plate (30) for support of a striker member on an automotive frame member (20), the striker reinforcement plate (30) comprising a central portion (32) formed with a pair of vertically spaced mounting holes (34), an enlarged mounting tab (35) at one end of the striker reinforcement plate (30) connected to the central portion (32) by at least one first strip (38) and a weld tab (36) at an opposing end of the striker reinforcement plate (30) connected to the central portion (32) by at least one second strip (38),
**characterized in that** the enlarged mounting tab (35) has a dimension that is greater than a mounting slot (25) formed in the automotive frame member (20) through which the central portion (32) can pass such that the enlarged mounting tab (35) cannot pass through the mounting slot (25).

2. A striker reinforcement plate as claimed in Claim 1 wherein the at least one first and second strips (38) are deformable strips.

3. A striker reinforcement plate as claimed in any of Claim 1 or 2, wherein the at least one first strip includes a pair of deformable first strips (38) interconnecting the mounting tab (35) to the central portion (32) and the at least one second strip includes a pair of deformable second strips (38) interconnecting the weld tab (36) to the central portion (32).

4. A striker reinforcement plate as claimed in any of Claims 1 to 3, wherein the weld tab (36) is insertable through an engagement opening (27) in the automotive frame member (20) so as to extend from an internal position of the automotive frame member (20) to an exterior surface of the automotive frame member (20) so that the weld tab (36) can be welded to the exterior surface of the automotive frame member (20).

5. An automotive body structure (10) comprising a closed tubular frame member (20) having an interior surface and an exterior surface **characterised in that** the tubular frame member (20) is formed with a pair of oversized holes (22), a mounting slot (25) and an engagement opening (27) and a striker reinforcement plate (30) as claimed in any of claims 1 to 4 is mounted on the frame member (20).

6. An automotive body structure as claimed in Claim 5, wherein the pair of vertically spaced mounting holes (34) of the central portion (32) are alignable with the oversized holes (22) in the frame member (20), the central portion (32) is engageable with the mounting slot (35) and the weld tab (36) is received within the engagement opening (27).

7. An automotive body structure as claimed in Claim 6, wherein the central portion (32) is movable relative to the mounting tab (35) and the weld tab (36) through deformation of the deformable strips (38) to permit an adjustable positioning of the mounting holes (34) relative to the oversized holes (22) in the frame member (20).

8. An automotive body structure as claimed in any of Claims 6 or 7, wherein the tubular frame member (20) is formed by a hydroforming process.

9. A method of installing a striker reinforcement plate (30) into a closed tubular automotive frame member (20) having a pair of oversized holes (22) formed therein extending between an exterior surface of the frame member (20) and an interior surface of the frame member (20) **characterised in that** the method comprises passing a weld tab (36) and a central portion (32) of the striker reinforcement plate (30) through a mounting slot (25) formed in the frame member (20), inserting the weld tab (36) from the interior surface of the frame member through an engagement opening (27) to the exterior surface of the frame member (20), positioning an enlarged mounting tab (35) of the striker reinforcement plate (30) on the exterior surface of the frame member (20) adjacent the mounting slot (25) to limit movement of the striker reinforcement plate (30) through the mounting slot (25) and welding the weld tab (36) to the exterior surface of the frame member (20).

10. A method as claimed in Claim 9, wherein the striker reinforcement plate (30) is formed with deformable strips (38) interconnecting, respectively, the mounting tab (35) and the weld tab (36) with the central portion (32) and the method further comprises orienting mounting holes (34) formed in the central portion (32) with the oversized holes (22) by deforming the deformable strips (38) to permit a movement of the central portion (32) relative to the oversized holes.

11. A method as claimed in Claim 10, wherein the orienting step is accomplished after the welding step.

12. A method as claimed in any of Claims 9 to 11, wherein the welding step is accomplished by MIG-welding the weld tab (36) to the exterior surface of the frame member (20).

13. A method as claimed in any of Claims 9 to 12, wherein the method further comprises orienting the frame member (20) such.that the mounting slot (25) is located above the engagement opening (27) before passing the weld tab (36) and the central portion (32) of the striker reinforcement plate (30) through the mounting slot (25) formed in the frame member (20).

14. A method as claimed in any of Claims 9 to 13, wherein the method further comprises using a tool (39) to engage mounting holes (34) in the central portion (32) through the oversized holes (22) so as to secure the striker reinforcement plate (30) in position before welding the weld tab (36) to the exterior surface of the frame member (20).

## Patentansprüche

1. Ein Schließverstärkungsblech (30) zur Unterstützung eines Anschlagteils an einem Element eines Fahrzeuguntergestells (20), wobei das Schließverstärkungsblech (30) aus einem Mittelteil (32) besteht, das ein Paar vertikal beabstandeter Montagelöcher (34), eine vergrößerte Befestigungslasche (35) an einem Ende des Schließverstärkungsblechs (30), die durch zumindest einen Streifen (38) mit dem Mittelteil (32) verbunden ist, und eine Schweißlasche (36) an einem entgegengesetzten Ende des Schließverstärkungsblechs (30), die mit dem Mittelteil (32) durch zumindest einen zweiten Streifen (38) verbunden ist, aufweist,
**dadurch gekennzeichnet, dass** die vergrößerte Befestigungslasche (35) eine Bemessung hat, die größer als ein Montageschlitz (25) ist, der im Element des Fahrzeuguntergestells (20) vorhanden ist, durch den das Mittelteil (32) so durchgeführt wird, damit die vergrößerte Befestigungslasche (35) nicht durch den Montageschlitz (25) durchgeführt werden kann.

2. Ein Schließverstärkungsblech entsprechend Anspruch 1, wobei der zumindest eine und zweite Streifen (38) jeweils ein verformbarer Streifen ist.

3. Ein Schließverstärkungsblech entsprechend Anspruch 1 oder 2, wobei zum zumindest ersten Steifen ein Paar verformbarer erster Streifen (38) gehört, welche die Befestigungslasche (35) mit dem Mittelteil (32) verbinden, und zum zumindest zweiten Streifen ein Paar verformbare zweite Streifen (38) gehört, welche die Schweißlasche (36) mit dem Mittelteil (32) verbinden.

4. Ein Schließverstärkungsblech entsprechend einem der Ansprüche 1 bis 3, wobei die Schweißlasche (36) durch eine Eingriffsöffnung (27) im Element des Fahrzeuguntergestells (20) eingeschoben werden kann, um so von einer internen Position des Teils des Fahrzeuguntergestells (20) zu einer Außenfläche des Teils des Fahrzeuguntergestells (20) zu verlaufen, damit die Schweißlasche (36) an die Außenfläche des Teils des Fahrzeuguntergestells (20) geschweißt werden kann.

5. Eine Fahrzeugkarosserie (10) bestehend aus einem geschlossenen röhrenförmigen Untergestellelement (20) mit einer Innenfläche und einer Außenfläche, **dadurch gekennzeichnet, dass** das röhrenförmige Untergestellelement (20) ein Paar übergroße Löcher (22), einen Montageschlitz (25) und eine Eingriffsöffnung (27) aufweist und ein Schließverstärkungsblech (30) entsprechend einem der Ansprüche 1 bis 4 am Untergestellelement (20) befestigt ist.

6. Eine Fahrzeugkarosserie entsprechend Anspruch 5, wobei das Paar vertikal beabstandeter Montagelöcher (34) des Mittelteils (32) auf die übergroßen Löcher (22) im Untergestellelement (20) ausgerichtet werden kann, das Mittelteil (32) mit dem Montageschlitz (35) verbunden werden kann und die Schweißlasche (36) in der Eingriffsöffnung (27) aufgenommen wird.

7. Eine Fahrzeugkarosserie entsprechend Anspruch 6, wobei das Mittelteil (32) relativ zur Befestigungslasche (35) und zur Schweißlasche (36) durch Deformierung der verformbaren Streifen (38) beweglich ist, um eine Abstimmung der Position der Montagelöcher (34) relativ zu den übergroßen Löchern (22) im Untergestellelement (20) zu ermöglichen.

8. Eine Fahrzeugkarosserie entsprechend Anspruch 6 oder 7, wobei das röhrenförmige Untergestellelement (20) durch ein Hydroformverfahren hergestellt wird.

9. Eine Methode zur Installation eines Schließverstärkungsblechs (30) in ein geschlossenes röhrenförmiges Fahrzeuguntergestellelement (20) mit einem Paar übergroßer Löcher (22), die zwischen Außenfläche des Untergestellelements (20) und einer Innenfläche des Untergestellelements (20) verlaufen, **dadurch gekennzeichnet, dass** die Methode folgendes umfasst, nämlich Durchführung einer Schweißlasche (36) und eines Mittelteils (32) der Schließverstärkungsplatte (30) durch einen Montageschlitz (25) im Untergestellelement (20), Einschieben der Schweißlasche (36) von der Innenfläche des Untergestellelements durch eine Eingriffsöffnung (27) zur Außenfläche des Untergestellelements (20), Positionieren einer vergrößerten Befestigungslasche (35) des Schließverstärkungsblechs (30) an der Außenfläche des Untergestellelements (20) neben dem Montageschlitz (25), um die Bewegung des Schließverstärkungsblechs (30) durch den Montageschlitz (25) zu beschränken, und Schweißen der Schweißlasche (36) an die Außenfläche des Untergestellelements (20).

10. Eine Methode entsprechend Anspruch 9, wobei das Schließverstärkungsblech (30) verformbare Streifen (38) aufweist, die jeweils die Befestigungslasche (35) und die Schweißlasche (36) mit dem Mittelteil (32) verbinden, und zur Methode zudem die Ausrichtung von Montagelöchem (34), die im Mittelteil (32) vorhanden sind, auf die übergroßen Löcher (22) gehört, indem die verformbaren Streifen (38) verformt werden, um eine Bewegung des Mittelteils (32) relativ zu den übergroßen Löchern zu ermöglichen.

11. Eine Methode entsprechend Anspruch 10, wobei der Schritt der Ausrichtung nach dem Schritt des Schweißens durchgeführt wird.

12. Eine Methode entsprechend Anspruch 9 bis 11, wobei der Schritt des Schweißens durch MIG-Schweißen der Schweißlasche (36) an die Außenfläche des Untergestellelements (20) erfolgt.

13. Eine Methode entsprechend einem der Ansprüche 9 bis 12, wobei die Methode zudem darin besteht, das Untergestellelement (20) so auszurichten, dass der Montageschlitz (25) über der Eingriffsöffnung (27) positioniert ist, bevor die Schweißlasche (36) und das Mittelteil (32) des Schließverstärkungsblechs (30) durch die Montagelasche (25) im Untergestellelement (20) durchgeführt werden.

14. Eine Methode entsprechend einem der Ansprüche 9 bis 13, wobei zur Methode zudem die Verwendung eines Werkzeugs (39) gehört, um in die Montagelöcher (34) im Mittelteil (32) durch die übergroßen Löcher (22) einzugreifen, um die Schließverstärkungsplatte (30) in Position abzusichern, bevor die Schweißlasche (36) an die Außenfläche des Untergestellelements (20) geschweißt wird.

## Revendications

1. Plaque de renforcement formant butée (30) servant de support à un élément de butée sur un élément de caisse de véhicule automobile (20), la plaque de renforcement formant butée (30) comprenant une partie centrale (32) formée avec une paire d'orifices de montage façonnés à égale distance l'un de l'autre à même la paroi verticale (34), une patte de montage élargie (35) à une extrémité de la plaque de renforcement formant butée (30) connectée à la partie centrale (32) par au moins une première bande (38) et une patte de soudage (36) à l'extrémité opposée de la plaque de renforcement formant butée (30) connectée à la partie centrale (32) par au moins une deuxième bande (38),
**caractérisé en ce que** la patte de montage élargie (35) a une dimension qui est plus grande qu'une encoche de montage (25) formée dans l'élément de caisse de véhicule automobile (20) à travers laquelle la partie centrale (32) peut passer de manière à ce que la patte de montage élargie (35) ne puisse pas passer à travers l'encoche de montage (25).

2. Plaque de renforcement formant butée selon le procédé de la Revendication 1 dans laquelle les au moins première et deuxième bandes (38) sont des bandes déformables.

3. Plaque de renforcement formant butée selon le procédé de l'une quelconque des Revendications 1 ou 2, dans laquelle la au moins première bande comprend une paire de premières bandes déformables (38) interconnectant la patte de montage (35) à la partie centrale (32) et la au moins deuxième bande comprend une paire de deuxièmes bandes déformables (38) interconnectant la patte de soudage (36) à la partie centrale (32).

4. Plaque de renforcement formant butée selon le procédé de l'une quelconque des Revendications 1 à 3, dans laquelle la plaque de soudage (36) est intercalable à travers une ouverture d'engagement (27) ménagée dans l'élément de caisse de véhicule automobile (20) de manière à s'étendre depuis une position interne de l'élément de caisse de véhicule automobile (20) jusqu'à une surface extérieure de l'élément de caisse de véhicule automobile (20) pour que la patte de soudage (36) puisse être soudée à la surface extérieure de l'élément de caisse de véhicule automobile (20).

5. Structure de caisse de véhicule automobile (10) comprenant un élément de caisse tubulaire fermé (20) présentant une surface intérieure et une surface extérieure **caractérisée en ce que** l'élément de caisse tubulaire (20) est formé avec une paire d'orifices surdimensionnés (22), une encoche de montage (25) et une ouverture d'engagement (27) et une plaque de renforcement formant butée (30) selon le procédé de l'une quelconque des revendications 1 à 4 est montée sur l'élément de caisse (20).

6. Structure de caisse de véhicule automobile selon le procédé de la Revendication 5, dans laquelle la paire d'orifices de montage façonnés à égale distance l'un de l'autre à même la paroi verticale (34) de la partie centrale (32) sont alignables avec les orifices surdimensionnés (22) ménagés dans l'élément de caisse (20), la partie centrale (32) est engageable avec l'orifice de montage (35) et la patte de soudage (36) est reçue au sein de l'ouverture d'engagement (27).

7. Structure de caisse de véhicule automobile selon le procédé de la Revendication 6, dans laquelle la partie centrale (32) est mobile relativement à la patte de montage (35) et à la patte de soudage (36) par le biais de la déformation des bandes déformables (38) afin de permettre un positionnement ajustable des orifices de montage (34) relativement aux orifices surdimensionnés (22) ménagés dans l'élément de caisse (20).

8. Structure de caisse de véhicule automobile selon le procédé de l'une quelconque des Revendications 6 ou 7, dans laquelle l'élément de caisse tubulaire (20) est formé par un procédé d'hydroformage.

9. Procédé d'installation d'une plaque de renforcement formant butée (30) dans un élément de caisse tubulaire fermé de véhicule automobile (20) doté d'une paire d'orifices surdimensionnés (22) formé dans la caisse s'étendant entre une surface extérieure de l'élément de caisse (20) et une surface intérieure de l'élément de caisse (20) **caractérisé en ce que** le procédé comprend le passage d'une patte de soudage (36) et une partie centrale (32) de la plaque de renforcement formant butée (30) à travers une encoche de montage (25) formée dans l'élément de caisse (20), l'insertion de la patte de soudage (36) depuis la surface intérieure de l'élément de caisse à travers un orifice d'engagement (27) jusqu'à la surface extérieure de l'élément de caisse (20), le positionnement d'une patte de montage élargie (35) de la plaque de renforcement formant butée (30) sur la surface extérieure de l'élément de caisse (20) adjacente à l'encoche de montage (25) afin de limiter le mouvement de la plaque de renforcement formant butée (30) à travers l'encoche de montage (25) et soudage de la patte de soudage (36) à la surface extérieure de l'élément de caisse (20).

10. Procédé tel que proposé à la Revendication 9, dans lequel la plaque de renforcement formant butée (30) est formée avec des bandes déformables (38) interconnectant, respectivement, la patte de montage (35) et la patte de soudage (36) avec la partie centrale (32) et le procédé consistant en outre en l'orientation des orifices de montage (34) formés dans la partie centrale (32) avec les orifices surdimensionnés (22) en déformant les bandes déformables (38) afin de permettre un mouvement de la partie centrale (32) relativement aux orifices surdimensionnés.

11. Procédé tel que proposé à la Revendication 10, dans lequel l'étape d'orientation est accomplie après l'étape de soudage.

12. Procédé tel que proposé dans les Revendications 9 à 11, dans lequel l'étape de soudage est accomplie par soudage MIG de la patte de soudage (36) à la surface extérieure de l'élément de caisse (20).

13. Procédé tel que proposé dans l'une quelconque des Revendications 9 à 12, dans lequel le procédé comprend en outre l'orientation de l'élément de caisse (20) de manière à ce que l'encoche de montage (25) soit située au-dessus de l'ouverture d'engagement (27) avant de passer la patte de soudage (36) et la partie centrale (32) de la plaque de renforcement formant butée (30) à travers l'encoche de montage (25) formée dans l'élément de caisse (20).

14. Procédé tel que proposé dans l'une quelconque des Revendications 9 à 13, dans lequel le procédé consiste en outre en l'utilisation d'un outil (39) pour engager les orifices de montage (34) dans la partie centrale (32) à travers les orifices surdimensionnés (22) de manière à assujettir la plaque de renforcement formant butée (30) en position avant de souder la patte de soudage (36) à la surface extérieure de l'élément de caisse (20).
